# EUROPÄISCHE PATENTANMELDUNG

(11) **EP 4 831 009 A1**
(43) Veröffentlichungstag der Anmeldung: **28.10.2026**
(21) Anmeldenummer: 26167594.6
(22) Anmeldetag: 25.03.2026
(51) Int. Cl.: B60R 19/12, B21D 22/20, B21D 35/00, B60R 19/18

(54) **STOSSFÄNGERANORDNUNG**

(30) Priorität: 23.04.2025 CN 202510523406; 26.09.2025 CN 202511394530
(71) Anmelder: Benteler Automobiltechnik GmbH, 33102 Paderborn (DE)
(72) Erfinder: FROST, Georg, 32839 Steinheim (DE); JIN, Binhui, hanghai (Municipality), P.R. China, 201821 (CN)
(74) Vertreter: Osterhoff, Utz

(57) **Zusammenfassung**

Die vorliegende Erfindung betrifft Stoßfängeranordnung 1 für ein Kraftfahrzeug, aufweisend einen Hauptquerträger 2 und einen auf die Kraftfahrzeugvertikalrichtung Z bezogen darunter angeordneten Hilfsquerträger 3, wobei der Hauptquerträger 2 und der Hilfsquerträger 3 jeweils einen um die Kraftfahrzeugvertikalrichtung Z gekrümmten Verlauf aufweisen und der Hauptquerträger 2 und der Hilfsquerträger 3 über vertikale Stege 7 miteinander verbunden sind, wobei der Hauptquerträger 2, Hilfsquerträger 3 und Stege 7 aus einer Tailor Welded Platine aus einem Stahlwerkstoff durch Pressumformen hergestellt sind, wobei der Hauptquerträger 2 und der Hilfsquerträger 3 im Querschnitt als einseitig offenes Hohlprofil ausgebildet sind und die Stoßfängeranordnung 1 über Crashboxen 4 mit dem Kraftfahrzeug gekoppelt ist, dadurch gekennzeichnet, dass der Hauptquerträger 2 abschnittsweise ein Schließblech 12 aufweist und dass die Stoßfängeranordnung 1 abschnittsweise unterschiedliche Festigkeiten und/oder Wandstärken aufweist.

## Beschreibung

Die vorliegende Erfindung betrifft eine Stoßfängeranordnung gemäß den Merkmalen im Oberbegriff von Anspruch 1.

Aus dem Stand der Technik ist es bekannt, dass Kraftfahrzeuge front- bzw. endseitig Stoßfängeranordnungen aufweisen. Im Falle eines Fahrzeugcrashs bzw. eines Auffahrunfalls oder auch eines Anpralls an einen Gegenstand werden durch eine solche Stoßfängeranordnung zwei Aufgaben erfüllt. Zum einen ist ein Querträger vorhanden. Der Querträger besitzt eine hinreichende Steifigkeit um zu verhindern, dass ein entsprechender Gegenstand oder ein Kraftfahrzeug zu stark in den Front- oder Endbereich eindringen würde. Mithin wird ein punktuelles Auftreffen, beispielsweise auf einen Pfahl, durch den Querträger auf einen Großteil der Kraftfahrzeugbreite übertragen.

Eine zweite Aufgabe, die durch eine Stoßfängeranordnung erfüllt wird, ist die Wandlung von Crashenergie in Umformarbeit und dadurch eine entsprechende Verminderung der Aufprallenergie. Hierzu ist ein jeweiliger Querträger über Crashboxen an das Kraftfahrzeug gekoppelt. Die Crashboxen sind hierzu auf die Kraftfahrzeugquerrichtung bezogen zwischen einem Mittelbereich und einem Endbereich des Querträgers angeordnet, mithin auf die Kraftfahrzeugbreite bezogen jeweils zwischen einem Drittel und einem Viertel mit der Länge im äußeren Bereich des Querträgers angeordnet. Die Crashboxen werden dann zumeist an Längsträger bzw. an ein frontseitiges Ende des Kraftfahrzeuges gekoppelt. Im Falle eines Aufpralles auf ein gegnerisches Fahrzeug mit vollständiger oder teilweiser Überlappung (small overlap) falten sich die Crashboxen beispielsweise ziehharmonikaartig und wandeln somit Crashenergie in Umformarbeit um. Dagegen wird durch eine gezielt starke Verformung des Querträgers selbst zu Beginn eines Zentralpfahl-Aufpralls bereits ein hohes Maß an Energie abgebaut, bevor durch gezieltes Einknicken der Crashboxen und gegebenenfalls der Längsträger die weitere Energie für die Insassen unkritisch abgebaut wird.

Aufgabe der vorliegenden Erfindung ist es, eine Stoßfängeranordnung bereit zu stellen, die gegenüber aus dem Stand der Technik bekannten Stoßfängeranordnungen eine verbesserte Crashperformance aufweist, gezielt auf verschiedene Crashanforderungen in der Produktion einstellbar ist und gleichzeitig besonders kostengünstig hergestellt werden kann.

Die zuvor genannte Aufgabe wird erfindungsgemäß mit einer Stoßfängeranordnung mit den Merkmalen im Anspruch 1 gelöst.

Vorteilhafte Weiterbildungen sind Gegenstand der abhängigen Ansprüche.

Die erfindungsgemäße Stoßfängeranordnung für ein Kraftfahrzeug ist insbesondere aus Stahlwerkstoff hergestellt. Hierzu wird ein Pressumformverfahren verwendet. Somit wird zunächst eine Platine bereitgestellt, die dann in ein Pressumformwerkzeug eingelegt wird und durch ein Pressumformverfahren, insbesondere ein Tiefziehverfahren, umgeformt wird. Hierbei kommt zumindest abschnittsweise die Warmumform- und Presshärtetechnologie zum Einsatz. Das heißt, es können zumindest partiell im Werkstoffgefüge Festigkeitseigenschaften eingestellt werden mit Zugfestigkeiten Rm größer 1.350 MPa. Dazu wird die Platine zumindest bereichsweise auf eine Temperatur über Austenitisierungstemperatur mit über AC3-Temperatur erwärmt. Dies entspricht je nach verwendeter Stahllegierung einer Temperatur von über 800 °C, insbesondere über 900 °C. Als Stahllegierung wird ein härtbarer Stahlwerkstoff verwendet, beispielsweise einer der Stähle A bis D gemäß Tabelle 1 und/oder 22MnB5. Anschließend wird die Platine im warmen Zustand umgeformt und derart rasch abgekühlt, dass die hochfesten Eigenschaften gezielt eingestellt werden.

Als Platine wird bei der erfindungsgemäßen Stoßfängeranordnung ein tailor welded blank verwendet. Dies ist eine Platine, die zunächst bereitgestellt wird aus verschiedenen, miteinander zusammengeschweißten Blechstücken bzw. Platinen. Diese werden erfindungsgemäß als Stumpfstoß miteinander verschweißt. Dies bedeutet, dass von den einzelnen zur Herstellung des tailor welded blanks verwendeten Platinen die jeweiligen Stirnseiten aneinander liegen. Hierdurch ergibt sich ein so genannter Stumpfstoß. Diese aneinander liegenden Stirnseiten werden dann miteinander verschweißt. Hierzu wird insbesondere ein Laserschweißen eingesetzt. Durch das Stumpfstoßschweißen wird ein besonders geringer Materialeinsatz und optional ein nur einseitiger Wanddickensprung mit Vorteilen im Presshärteprozess durch besseren Anlagenkontakt und dadurch kürzere Abkühlrate erreicht. Gleichzeitig kann eine hohe Güte der hergestellten Schweißnaht erreicht werden, so dass sich im Crashfall eine sichere Verbindung der einzelnen Platinenteile ergibt. Durch die Verwendung eines tailor welded blanks kann bereits bei dem Rohling, also vor dem Pressumformverfahren, gezielt an die zu erfüllenden Crasheigenschaften angepasst eine entsprechende Wandstärke verwendet werden. Bevorzugt werden Wandstärken zwischen 0,5 mm und 4 mm, insbesondere von 1 mm bis 3 mm verwendet. Alternativ oder ergänzend können unterschiedliche Festigkeiten eingestellt werden. Beispielsweise kann in den Bereichen, in denen keine Festigkeitssteigerung erfolgen soll, ein Stahl mit geringerer Stahlgüte, beispielsweise ein nicht oder weniger härtbaren Stahl, verwendet werden. Hierfür eignen sich beispielsweise die Stähle **E,** F gemäß Tabelle 1. Hierdurch werden wiederum Material- bzw. Kosteneinsparungen in den verwendeten Stahlsorten erreicht. Auch bei dem späteren Warmumform- und Presshärteverfahren kann die Platine vollständig erwärmt werden. Dadurch, dass in den Bereichen, die keine gesteigerte Festigkeit erreichen sollen, keine härtbaren Eigenschaften der verwendeten Stahllegierung vorhanden sind, muss nicht mit aufwendigen partiellen Erwärmungs- oder Abkühlungsverfahren oder partiell beheizten Formwerkzeugen gearbeitet werden. Das gesamte tailor welded blank kann somit erwärmt, warmumgeformt und pressgehärtet werden. In den Bereichen, in denen dann keine oder geringer härtbaren Eigenschaften vorhanden sind, wird der Stahl auch nicht oder in geringerem Maße gehärtet und hat somit weichere bzw. duktilere Eigenschaften. Insbesondere ist hier dann eine Zugfestigkeit Rm unter 1.000 MPa vorhanden, bevorzugt eine Zugfestigkeit zwischen 500 MPa und 1.000 MPa, insbesondere zwischen 500 MPa und 800 MPa.

Der Stumpfstoß ist an mindestens einer, bevorzugt zweien, insbesondere mehreren und bevorzugt an allen Verbindungsstellen der Tailor Welded Blank Platine ausgebildet. Insbesondere ist dieser dann laserverschweißt.

Es kann jedoch ergänzend in mindestens einem Bereich, bevorzugt in zwei Bereichen zu einer Überlappung und einer Verschweißung im Bereich der Überlappung kommen, mithin zu keinem Stumpfstoß im Bereich der Überlappung. Insbesondere ist die Überlappung im Crashboxanbindungsbereich ausgebildet. Hierdurch wird der Hauptquerträger in diesem Bereich durch die Doppellage verstärkt. Die Fläche der Überlappung beträgt somit bevorzugt mehr als 10 cm². Die Fläche der Überlappung, also einer Überlappung, beträgt insbesondere mehr als 10 cm², besonderes bevorzugt mehr als 50 cm², insbesondere 100 cm² bis 200 cm². Im Bereich der Überlappung kann umlaufend zumindest abschnittsweise geschweißt sein. Der Bereich der Überlappung kann jedoch auch anderweitig gefügt sein, beispielsweise durch ein Kleben und/oder Nieten. Die Stoßfängeranordnung selbst weist nunmehr einen Hauptquerträger und einen auf die Kraftfahrzeugvertikalrichtung bezogenen darunter angeordneten Hilfsquerträger auf. Der Hauptquerträger und der Hilfsquerträger sind somit in Kraftfahrzeugvertikalrichtung auf die Höhe bezogen zueinander versetzt angeordnet.

Der Hilfsquerträger schließt eine unteren Lastpfad über Fahrzeugschweller und vorderen Achsträger bzw. Hilfsrahmen und gegebenenfalls untere Crashboxen oder Längsträger nach vorn hin ab.

Der Hauptquerträger und der Hilfsquerträger weisen jeweils einen um die Kraftfahrzeugvertikalrichtung gekrümmten Verlauf auf. Hauptquerträger und Hilfsquerträger können voneinander verschiedene Krümmungsradien aufweisen. Der Krümmungsradius kann sich über den Längsverlauf von sowohl Hauptquerträger als auch Hilfsquerträger jeweils ändern. Die Crashboxen sind insbesondere am Hauptquerträger gekoppelt.

Der Hauptquerträger und der Hilfsquerträger sind über vertikale Stege miteinander verbunden. Mindestens sind vertikale Stege bezogen auf die Kraftfahrzeugquerrichtung in einem äußeren Endbereich angeordnet. Hier ergibt sich insbesondere der Vorteil, dass diese vertikalen Stege dann insbesondere auf die Kraftfahrzeugquerrichtung bezogen vor einem dahinter befindlichen Rad angeordnet sind. Besonders bevorzugt wird die Stoßfängeranordnung im vorderen Bereich des Kraftfahrzeuges angeordnet. Hierdurch ergibt sich ein zusätzlicher Lastpfad. Würde ein Frontalaufprall stattfinden, würden die Stege auf das dahinter befindliche Rad auftreffen und somit am Rad und entweder zunächst der Radaufhängung, sofern das Rad dann gegen einen dahinter befindlichen Schweller geschoben wird, einen diesbezüglichen zusätzlichen Lastpfad bereitstellen. Weiterhin bevorzugt können jedoch auch mindestens vier Stege ausgebildet sein. Zwei Stege sind dann besonders bevorzugt im Bereich der Crashboxen angeordnet, zwei weitere Stege im äußeren Endbereich, insbesondere vor einem jeweiligen Rad angeordnet. Die Stege können im Wesentlichen vertikal orientiert verlaufend ausgebildet sein. Insbesondere sind die Koppelstellen zwischen jeweiligem Steg und Hauptquerträger sowie jeweiligem Steg und Hilfsquerträger wie bereits eingangs erwähnt im Stumpfstoß ausgebildet.

Die Stoßfängeranordnung ist dann mittels Pressumformen hergestellt. Hierzu wird zunächst der Rohling als tailor weldet blank bereitgestellt. Der gesamte tailor welded blank ist bevorzugt bereits an die zu erreichende Geometrie der Stoßfängeranordnung angepasst. Aufgrund der Ausgestaltung mit Hauptquerträger, Hilfsquerträger und Stegen kann jedoch das Verschnittmaterial weitestgehend reduziert werden. Der tailor welded blank wird dann einteilig, d. h. der eine tailor welded blank in ein Pressumformwerkzeug eingelegt und zu der Stoßfängeranordnung umgeformt. Insbesondere sind hierbei Hauptquerträger und Hilfsquerträger im Querschnitt als einseitig offenes Hohlprofil ausgebildet. Insbesondere können diese im Querschnitt zumindest abschnittsweise, insbesondere vollständig über ihren jeweiligen Längsverlauf C-förmig, U-förmig oder auch hutförmig ausgebildet sein. Auch die Stege können in ihrem Querschnitt C-förmig, U-förmig oder hutförmig ausgebildet sein. Besonders bevorzugt ist die offene Seite dieses einseitig offenen Hohlprofils auf die Kraftfahrzeuglängsrichtung bzw. vom Fahrzeug weg weisend geöffnet bzw. in Hauptfahrtrichtung bezogen nach vorne hin zeigend angeordnet.

Alternativ ist nur der Hauptquerträger und äußere Stege vom Fahrzeug weg weisend geöffnet ausgebildet und innere Stege und der Hilfsquerträger zum Fahrzeug hin geöffnet.

Der Hauptquerträger weist weiterhin zumindest abschnittsweise ein Schließblech auf. Durch das Schließblech ist es somit möglich, die Crasheigenschaften mit zu beeinflussen, indem das Schließblech dem Aufbiegen des offenen Hohlprofils des Hauptquerträgers und gegebenenfalls des Hilfsquerträgers entgegenwirkt und die Profilsteifigkeit erhöht. Insbesondere ist das Schließblech auf die Kraftfahrzeugquerrichtung zentral angeordnet und erstreckt sich über einen Längsverlauf des Hauptquerträgers von mindestens 20 %, bevorzugt mehr als 30 % und besonders bevorzugt mehr als 40 %. In einer besonders bevorzugten Ausgestaltungsvariante kann sich das Schließblech über den gesamten Längsverlauf, mithin über die gesamte Breite des Hauptquerträgers, erstrecken.

Ferner weist weiterhin die Stoßfängeranordnung abschnittsweise unterschiedliche Festigkeiten auf. Unter Festigkeit ist insbesondere die Zugfestigkeit Rm zu verstehen. Alternativ oder ergänzend zu den unterschiedlichen Festigkeiten kann die Stoßfängeranordnung abschnittsweise unterschiedliche Wandstärken aufweisen. Hierdurch ist es möglich, gezielt an die zu erfüllenden Crasheigenschaften eine Anpassung der Wandstärken und/oder Festigkeiten auszubilden. Beispielsweise kann der Hauptquerträger eine erhöhte Festigkeit bzw. erhöhte Wandstärke aufweisen im Vergleich zu beispielsweise dem Hilfsquerträger und/oder den Stegen.

Durch die erhöhte Festigkeit und/oder Wandstärke sowie insbesondere auch weiterhin das Schließblech ist es somit möglich, gezielt die zu erfüllenden Crasheigenschaften einzustellen. Besonders bevorzugt ist der Hauptquerträger in einem Anbindungsbereich, welcher sich von Crashbox zu Crashbox erstreckt, mit einer erhöhten Festigkeit und/oder erhöhten Wandstärke und zumindest abschnittsweise über den Längsverlauf einem Schließblech ausgestattet. Hierdurch ergibt sich eine besonders hohe Steifigkeit in einem mittleren Bereich des Hauptquerträgers.

Weiterhin besonders bevorzugt weist der Hauptquerträger und/oder der Hilfsquerträger in einem Anbindungsbereich zwischen den Crashboxen an einer Vorderseite bzw. Vorderwand oder einer Rückseite bzw. Rückwand zwei Triggersicken auf. Eine jeweilige Triggersicke ist dann von einer bezogen auf die Kraftfahrzeugquerrichtung, Mitte des Hauptquerträgers bis zu einer Crashbox angeordnet. Im Falle der Vorderwand ist bevorzugtin einem Längenbereich zwischen 0,008 und 0,38 mal der Länge des Hauptquerträgers von einer Mitte des Hauptquerträgers aus gesehen bis zur Crashbox jeweils eine Triggersicke, nachfolgend auch Sicke genannt, angeordnet. Die Sicke in der Vorderwand, d. h. im Flansch des Hutprofils, weist insbesondere eine Tiefe relativ zur Tiefe des Hauptquerträgers im selben Querschnitt von 1/10 bis 1/3, besonders bevorzugt 1/8 bis 1/4 auf. Die Breite kann zwischen einigen Millimetern bis einigen Zentimetern, höchstens aber 1/10 der Länge des Hauptquerträgers zwischen den Crashboxen betragen. In Frontansicht auf die Stoßfängeranordnung ist somit von der Mitte bezogen linksseitig und rechtsseitig jeweils eine Triggersicke ausgebildet. Der Hauptquerträger ist hier zunächst besonders biegesteif ausgebildet durch zuvor beschriebene Maßnahmen. Die Triggersicken ermöglichen es jedoch, eine initiale Crashenergie im Falle beispielsweise eines Frontalaufpralls oder eines Pfahltests zu reduzieren, da der Hauptquerträger in sich nachgibt, ohne jedoch seine Gesamtsteifigkeit zu verlieren. Im Falle einer Sicke in der Rückwand (Konkavität) handelt es sich im Vergleich zur Vorderwand-Sicke um eine relativ breite Sicke, welche über die gesamte Rückwandhöhe verläuft und den Querschnitt des Hutprofils entsprechend verjüngt. Die Sicke weist insbesondere eine Tiefe relativ zur Tiefe des Hauptquerträgers im selben Querschnitt von 1/10 bis ½, besonders bevorzugt 1/5 bis 1/3 auf. Die Breite kann zwischen einigen Zentimetern bis höchstens 1/5 der Länge des Hauptquerträgers zwischen den Crashboxen betragen. Die Rückwand-Sicke ist jeweils in einem Längenabschnitt zwischen 0,3 und 0,45 mal der Länge des Querträgers, von der Mitte des Querträgers aus gesehen bis zur Crashbox, ausgebildet. Insbesondere im Falle einer nur auf einer Flanschseite vorgesehenen Sicke kann diese mit der Rückwand-Sicke synergetisch zusammenwirken. Alternativ kann die Rückwand-Sicke vollständig entfallen oder weniger stark ausgeprägt sein, insbesondere dann, wenn bereits Sicken vorn in beiden Flanschen des Hauptquerträgers angeordnet sind.

Die erhöhten Festigkeiten sind insbesondere bei einer Zugfestigkeit Rm größer 1.350 MPa, besonders bevorzugt größer 1.500 MPa ausgebildet. Die Zugfestigkeit Rm sollte jedoch 2.500 MPa nicht überschreiten. In den relativ dazu bezogen ungehärteten oder weichen Bereichen ist die Zugfestigkeit insbesondere zwischen 500 MPa und 1.000 MPa ausgebildet.

Optional ergänzend können auch der Hilfsquerträger und/oder die Stege von einem Schließblech verschlossen sein. Das Schließblech beim Hilfsquerträger ist insbesondere abschnittsweise ausgebildet. In einer bevorzugten Ausgestaltungsvariante kann auch das Schließblech die gesamte Länge des Hilfsquerträgers überdecken.

Im Falle von beispielsweise vier Stegen können auch nur zwei Stege von einem Schließblech verschlossen sein.

Es kann auch ein Gesamtschließblech angeordnet sein, welches Hauptquerträger, Hilfsquerträger und Steg von hinten verschließt.

Insbesondere sind im Falle von Schließblechen der Hauptquerträger, die Stege und/oder der Hilfsquerträger im Querschnitt selbst hutförmig ausgebildet. Es stehen somit Flansche außenseitig über, welche mit dem Schließblech verschweißt sind. Das Schließblech wird dann insbesondere nach dem Pressumformverfahren mit dem Hauptquerträger bzw. Stegen und Hilfsquerträger verschweißt.

Im Zuge der Herstellungseffizienz wird insbesondere das Schließblech aus Verschnittbereichen hergestellt, welche für die einzelnen Platinen zur Bereitstellung des tailor welded blanks bereitgestellt werden.

Aus weiteren Effizienzgründen wird das Schließblech dann bevorzugt in einem Pressenhub mit dem tailor welded blank umgeformt. Das Schließblech liegt hier jedoch insbesondere neben dem tailor welded blank und bildet keine Doppellage während des Warmumformens aus. Das Schließblech selbst kann auch warmgeformt und pressgehärtet ausgebildet sein.

In einer besonders bevorzugten Ausgestaltungsvariante weist der Hauptquerträger in seinem Querschnitt voneinander verschiedene Radien auf. Insbesondere betrifft diesen Radius den Übergang des Hauptquerträgers im Querschnitt von rückseitigem Steg zum Schenkel. In einem Längenabschnitt an den Crashboxen, ist dieser Radius des Hutprofils kleiner ausgebildet, mithin in einem Anbindungsbereich der Crashboxen. Mithin geht der Querschnitt eher zu einem rechteckigen Querschnitt im Übergang von rückseitigem Steg des Hutprofils zu den daran jeweils angrenzenden Schenkeln. Der Hauptquerträger ist im Querschnitt selbst somit rechtwinkliger bzw. rechteckiger ausgebildet. Durch diese Maßnahme ist Anbindungsstelle der Crashbox verbessert bzw. vergrößert. Es ergibt sich somit eine geringere Rissgefahr bei beispielsweise einem zentralen Polcrash, sowohl in der Fügeverbindung zur Crashbox als auch in der Mitte des Querträgers selbst. In dem Längenabschnitt zwischen den Crashboxen, mithin in einem Crashboxanbindungsbereich, ist der Radius zwischen rückseitigem Steg und Schenkeln größer ausgebildet. Der Querschnitt des Hutprofils im Bereich von Schenkel und Steg ist somit runder bzw. geschwungener ausgebildet.

Der Unterschied des Radius im Crashboxanbindungsbereich von Übergang Steg zu Schenkel zum Radius im Längenabschnitt zwischen den Crashboxen, aber insbesondere in der Mitte des Querträgers sollte 50 % betragen. Mithin ist der Radius zwischen den Crashboxen wenigstens 50 %, bevorzugt mindestens 100 % bis zu 400 % größer als der Radius im Crashboxanbindungsbereich.

Ein mittlerer Längenabschnitt des Querträgers erstreckt sich in Kraftfahrzeugquerrichtung über mindestens 300 mm, bevorzugt 350 mm. Der mittlere Längenabschnitt sollte jedoch nicht länger als 1.000 mm sein, bevorzugt kleiner 500 mm.

Der Radius im Bereich der Crashboxanbindung beträgt 3 mm bis 6 mm, insbesondere 4 mm bis 5 mm. Im mittleren Längenabschnitt, also zwischen den Crashboxen kann der Radius zwischen 10 mm und 30 mm, insbesondere zwischen 11 mm und 20 mm, bevorzugt zwischen 14 mm und 16 mm, ganz besonders bevorzugt ca. 15 mm betragen. Mit Radius ist der Übergang zwischen Unterschenkel und Steg zu verstehen.

In einer weiteren bevorzugten Ausgestaltungsvariante ist der Hauptquerträger um die Kraftfahrzeugvertikalrichtung eine Krümmung aufweist, wobei der Krümmungsradius sich über den Längsverlauf des Hauptquerträgers ändert, insbesondere ist der Krümmungsradius in einem mittleren Bereich zwischen den Crashboxen kleiner und im Bereich der Crashboxanbindung größer. In den Endbereichen kann der Krümmungsradius wiederum kleiner werden, mithin ist eine stärke Krümmung vorhanden. Hierdurch kann im Bereich der Crashboxanbindung eine im Wesentlichen geradere, nicht so stark gekrümmte Fläche bereitgestellt werden. Dies wirkt sich vorteilig auf die Energieübertragung im Crashfall aus. Im mittleren Bereich, mithin zwischen den Crashboxanbindungen ist die Krümmung stärker ausgebildet, also der Krümmungsradius kleiner. Hierdurch ist der Querträger in diesem Bereich stärker gebogen.

Weitere Vorteile, Merkmale und Eigenschaften und Aspekte der vorliegenden Erfindung sind Gegenstand der nachfolgenden Beschreibung. Bevorzugte Ausgestaltungsvarianten werden in den schematischen Figuren dargestellt. Die zuvor beschriebenen Ausführungen sowie die Figuren können beliebig auch in Einzelmerkmalen miteinander kombiniert werden, ohne dabei den Offenbarungsgehalt der Erfindung zu verlassen. Es zeigen:
- Figur 1: eine perspektivische Ansicht einer erfindungsgemäßen Stoßfängeranordnung,
- Figur 2a + b: eine Platine vor der Umformung im Falle von Figur 2a und der umgeformte Stoßfänger in Frontalansicht im Falle von Figur 2b,
- Figur 3a + b: eine alternative Ausgestaltungsvariante zu Figur 2a und b,
- Figur 4a +b: eine alternative Ausgestaltungsvariante zu Figur 2a und b,
- Figur 5 + 6: eine alternative Ausgestaltungsvariante zu Figur 2a und b,
- Figur 7: eine alternative Ausgestaltungsvariante zu einem erfindungsgemäßen Stoßfänger,
- Figur 8: eine Draufsicht auf eine erfindungsgemäße Stoßfängeranordnung,
- Figur 9: eine Draufsicht analog zu Figur 8,
- Figur 10: eine alternative Ausgestaltungsvariante,
- Figur 11: eine weitere Stirnansicht auf eine Stoßfängeranordnung,
- Figur 12a +b: eine Stirnansicht einer alternativen Ausgestaltungsvariante,
- Figur 13a + b: eine analoge Ausgestaltungsvariante zu Figur 12a und b,
- Figur 14a + b: eine analoge Ausgestaltungsvariante zu Figur 12a und b,
- Figur 15: eine alternative Ausgestaltungsvariante und
- Figur 16: einen eigenständigen Erfindungsgedanken eines Querträgers mit Überlappung. Dieser kann mit den zuvor genannten Ausführungsvarianten kombiniert werden.

In den Figuren werden für gleiche oder ähnliche Bauteile dieselben Bezugszeichen verwendet, auch wenn eine wiederholte Beschreibung oder Darstellung aus Vereinfachungsgründen entfällt.

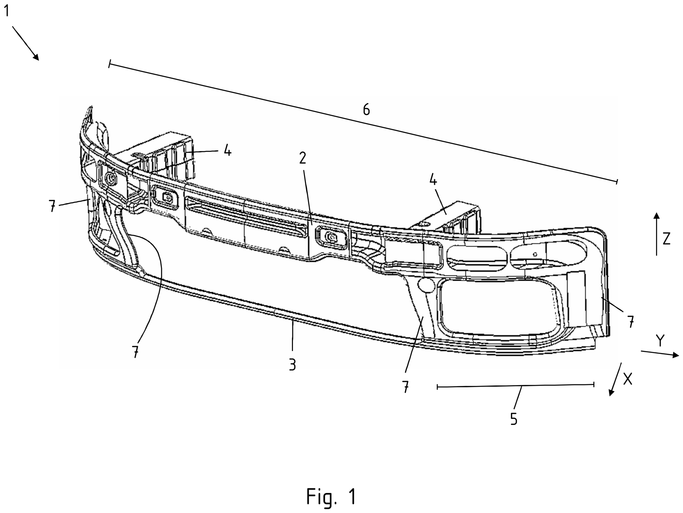

Figur 1 zeigt eine erfindungsgemäße Stoßfängeranordnung 1 zur Montage an einem nicht näher dargestellten Kraftfahrzeug. Die Stoßfängeranordnung 1 weist einen auf die Kraftfahrzeugvertikalrichtung Z bezogen oben liegenden Hauptquerträger 2 sowie einen darunter liegenden Hilfsquerträger 3 auf. Der Hauptquerträger 2 und der Hilfsquerträger 3 sind somit auf die Kraftfahrzeugvertikalrichtung Z zueinander versetzt angeordnet. Die Stoßfängeranordnung 1 weist ferner Crashboxen 4 auf. In dieser Ausgestaltungsvariante sind die Crashboxen 4 mit dem Hauptquerträger 2 gekoppelt. Auf die Kraftfahrzeuglängsrichtung X bezogen sind die Crashboxen 4 hinter dem Hauptquerträger 2 angeordnet. Auf die Kraftfahrzeugquerrichtung Y bezogen steht über die Crashboxen 4 jeweils ein außen liegender Endbereich 5 über. Der Endbereich 5 kann beispielsweise zwischen 10 und 30 % der gesamten Länge bzw. Breite des Hauptquerträgers 2 aufweisen. Im Falle einer hinteren Querträgeranordung kann der Endbereich aber auch entfallen.

Der Hauptquerträger 2 und der Hilfsquerträger 3 sind jeweils über Stege 7 miteinander verbunden. Die Stege 7 sind im Wesentlichen vertikal orientiert ausgebildet, mithin orientiert sich der Verlauf der Stege 7 in die Kraftfahrzeugvertikalrichtung Z. Hier vorgesehen sind insgesamt vier Stege 7. Zwei Stege 7 sind im Bereich der Crashboxen 4 angeordnet. Ferner sind zwei Stege 7 außenliegend angeordnet, insbesondere im äußeren Endbereich 5. Ein nicht näher dargestelltes Kraftfahrzeugrad kann sich dann hinter den äußeren Stegen 7 in Kraftfahrzeuglängsrichtung X befinden. Würde die Stoßfängeranordnung 1 in einem Crashfall auf die Kraftfahrzeuglängsrichtung X nach hinten deformiert werden, würden sich zum einen die Crashboxen 4 falten und dabei Crashenergie abbauen. Ferner würden die außen liegenden Stege 7 auf ein dahinter befindliches Rad auftreffen und somit einen zusätzlichen Lastpfad bereitstellen.

Der Hauptquerträger 2 und der Hilfsquerträger 3 weisen jeweils eine Krümmung auf. Die Krümmung ist um die Kraftfahrzeugvertikalrichtung Z orientiert ausgebildet. Die Krümmung ist nicht konstant. Der Krümmungsradius unterscheidet sich über den Längsverlauf von dem Hauptquerträger 2 und auch von dem Hilfsquerträger 3. Die Krümmungen von Hauptquerträger 2 und Hilfsquerträger 3 können gleich oder ähnlich ausgebildet sein. Die Krümmungen können jedoch auch voneinander verschieden ausgebildet sein. In dieser Ausgestaltungsvariante ist der Hilfsquerträger 3 in einem mittleren Bereich, also zwischen den Crashboxen 4, bevorzugt auf die Kraftfahrzeuglängsrichtung X gegenüber dem Hauptquerträger 2 nach hinten versetzt angeordnet.

In Hauptquerträger 2 und im Hilfsquerträger 3 können verschiedene Öffnungen vorhanden sein. Beispielsweise um eine Abschlepphülse zu befestigen oder Sensoren zu platzieren sowie auch zur Gewichtseinsparung.

Insbesondere ist der Endbereich 5 ringförmig ausgebildet. Die Ringform ergibt sich dabei durch den Hauptquerträger 2 im oberen Bereich, den Hilfsquerträger 3 im unteren Bereich sowie die zwei Stege 7. Ein solcher ringförmiger Endbereich wirkt sich vorteilig auf ein Crashszenario aus.

Vorzugsweise ist der Hilfsquerträger 3 zusätzlich über Crashboxen 4 oder untere Längsträger (nicht gezeigt) am Fahrzeug festgelegt.

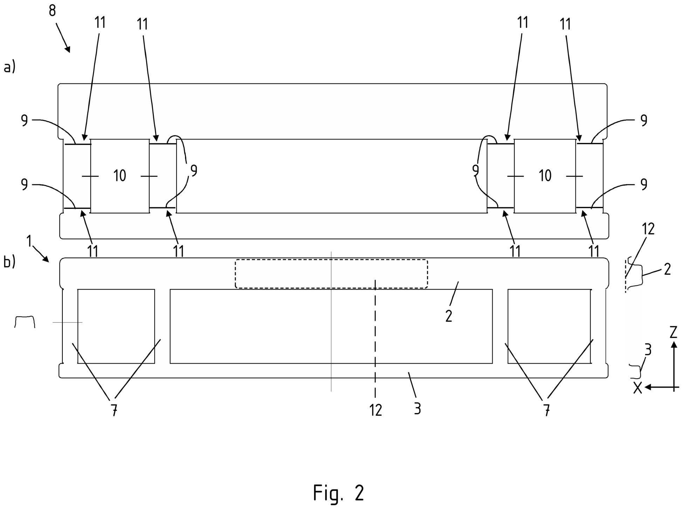

Figur 2 a zeigt eine tailor welded blank Platine 8 vor dem Pressumformen zur Herstellung der Stoßfängeranordnung 1, die in Figur 2b in Frontalansicht sowie 2 Querschnittsansichten gezeigt ist sowie die zwei jeweilige Querschnittsansichten gezeigt ist. Zunächst wird gemäß Figur 2a eine tailor welded blank Platine 8 bereitgestellt. Diese ist in ihren äußeren Abmessungen bezogen auf die spätere Kraftfahrzeugvertikal- Z und Kraftfahrzeuglängsrichtung X zunächst größer ausgebildet als der spätere Hauptquerträger 2, Hilfsquerträger 3 sowie die verbindenden Stege 7. Dies ist darin begründet, dass die Platine 8 dann mittels eines Pressumformverfahrens umgeformt wird und sich somit in Draufsicht die äußeren Abmessungen verkleinern. An den Verbindungsstellen 9 zwischen dem späteren Hauptquerträger 2 und den Stegen 7 ist die tailor welded blank Platine 8 im Stumpfstoß ausgebildet. Mithin liegen die Stirnseiten in diesem Bereich aneinander. Im Bereich der Anbindung eines jeweiligen Stegbleches 10 ist ein jeweiliger Fortsatz bzw. Überstand 11 ausgebildet sowohl an dem späteren Hauptquerträger 2 als auch an dem späteren Hilfsquerträger 3. Es hat sich als vorteilig erwiesen, wenn nach der Umformung der Bereich der späteren Schweißnaht einen gewissen Überstand 11 gegenüber dem Hauptquerträger 2 aufweist. Bevorzugt ist hier im Bereich der Schweißnaht keine Schwächung bzw. eine zu vernachlässigende Schwächung durch diese geometrische Ausgestaltung des Überstandes 11 bzw. Fortsatzes zu verzeichnen.

In Figur 2b ist dann in Stirnansicht der späteren Stoßfängeranordnung 1 mithin nach dem Pressumformen dargestellt. Die Schnittansichten zeigen, dass sowohl im Bereich der Stege 7 auf die Bildebene bezogen links ein U-förmiger Querschnitt ausgebildet ist. Ferner ist im Bereich der Mitte ein Schnitt gezogen. Die Schnittansichten sind dann dargestellt in Figur 2b auf die Bildebene bezogen rechts. Der Querschnitt vom Hauptquerträger 2 ist im Wesentlichen hutförmig ausgebildet. Ferner ist ein Schließblech 12 vorgesehen. Bezogen auf die Kraftfahrzeuglängsrichtung X sind die U-förmigen bzw. hutförmigen Querschnittsprofile von Hauptquerträger 2 und Hilfsquerträger 3 sowie auch der Stege 7 nach vorne hin offen ausgebildet, mithin in Fahrtrichtung offen. Das Schließblech 12 ist somit in Fahrtrichtung nach vorne angeordnet. Das Schließblech 12 erstreckt sich gemäß Figur 2b über einen mittleren Abschnitt bezogen auf die Gesamtlänge des Hauptquerträgers 2 über ca. 20 bis 50 %.

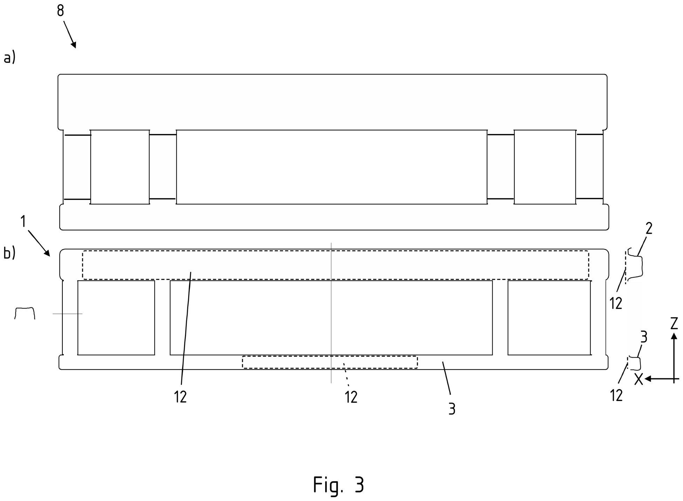

Figur 3a und b zeigen eine alternative Ausgestaltungsvariante zu Figur 2. Diese unterscheidet sich im Wesentlichen darin, dass das Schließblech 12 des Hauptquerträgers 2 sich im Wesentlichen über die gesamte Breite erstreckt, hier jedoch dargestellt über ca. 90 bis 95 % der Gesamtlänge des Hauptquerträgers 2. Ferner ist ein weiteres Schließblech 12 im Bereich des Hilfsquerträgers 3 angeordnet. Das Schließblech 12 im Bereich des Hilfsquerträgers 3 ist mittig angeordnet und erstreckt sich über einen Länge 6 von ca. 20 bis 50 % des Hilfsquerträgers 3.

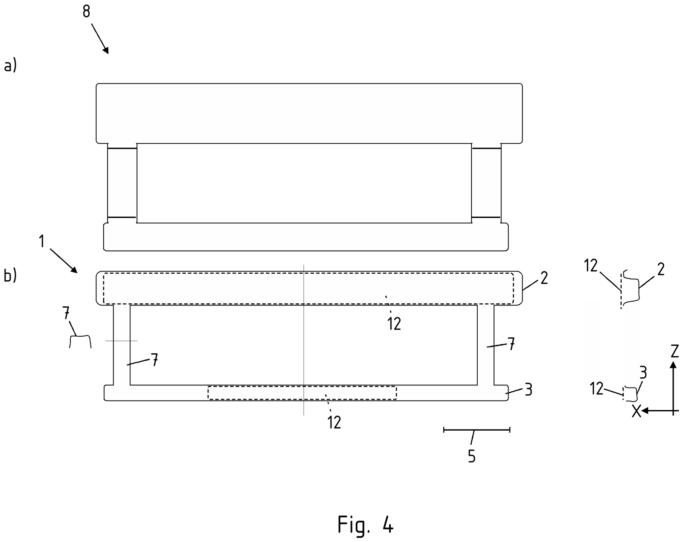

Figur 4a und b zeigen eine alternative Ausgestaltungsvariante zu den Stoßfängeranordnungen 1 gemäß Figur 2 und 3. Hierbei sind Hauptquerträger 2 und Hilfsquerträger 3 über jeweils nur einen Steg 7 miteinander verbunden. Der Steg 7 ist in einem äußeren Endbereich 5 bezogen auf die Kraftfahrzeugquerrichtung Y angeordnet. Gemäß der Schnittansichten in Figur 4b ist ferner ein Schließblech 12 im Bereich des Hauptquerträgers 2 ausgebildet. Das Schließblech 12 erstreckt sich im Wesentlichen über die gesamte Breite des Hauptquerträgers 2, bevorzugt über ca. 95 %. Ferner dargestellt ist ein Schließblech 12 im Bereich des Hilfsquerträgers 3, welches sich über ca. 20 bis 50 % der Breite des Hilfsquerträgers erstreckt.

Anders als die vorherigen Ausführungsbeispiele weist die Ausgestaltungsvariante keinen ringförmigen, überstehenden Endbereich und nur ein paar außen angeordnete Streben 7 auf. Die Streben 7 liegen vorzugsweise nahe oder direkt unter den Crashboxen 4. Eine solche, schmalere Anordnung ist für ein hinteres Stoßfängersystem besonders gut geeignet.

Ein in Figur 1 gekennzeichneter Überstand 5 und ringförmiger Bereich ist hier nicht vorhanden, so dass sich dieses Beispiel insbesondere als hintere Stoßfängeranordnung 1 eignet.

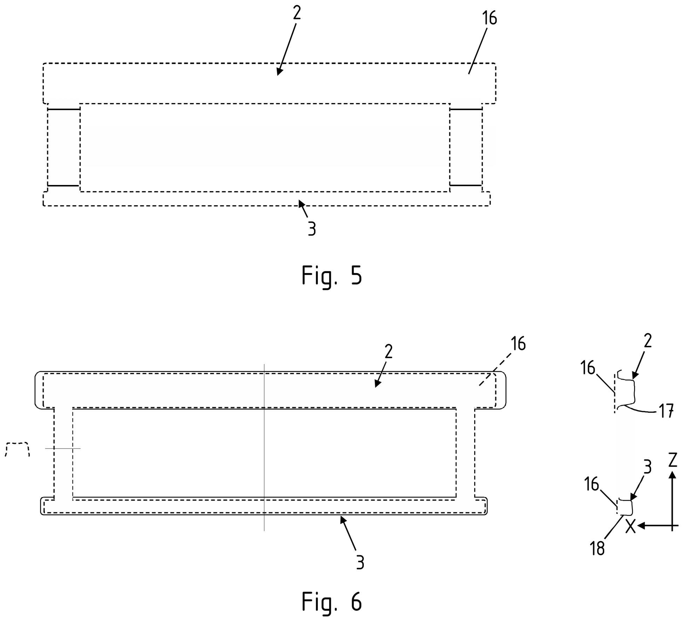

Fig. 5 und Fig. 6 zeigen eine vordere Schale 16 ausgebildet aus einem vorderen Teil des Hauptquerträgers 2, den Stegen 7 und einem vorderen Teil des Hilfsquerträgers 3, welche zusammen einstückig aus einer einzigen stumpfgeschweißten TWB Platine hergestellt sind. Ein - insbesondere stärker profilierter - hinterer Teil 17 des Hauptquerträgers 2 und ein - insbesondere stärker profilierter - hinterer Teil 18 des Hilfsquerträgers 3 sind hier jeweils separat hergestellt und mit der vorderen Schale 16 aus der TWB gefügt. Die vordere Schale 16 ist insbesondere durch Warmumformen und Presshärten hergestellt.

Ferner ist ein jeweiliges Schließblech 12 dargestellt, welches vor dem Hauptquerträger 2 und vor dem Hilfsquerträger 3 angeordnet ist. Hauptquerträger 2 und Hilfsquerträger 3 sind jeweils als einseitig offenes Hohlprofil bzw. Hutprofil ausgebildet, wobei die Öffnung in Kraftfahrzeuglängsrichtung X nach vorne angeordnet ist.

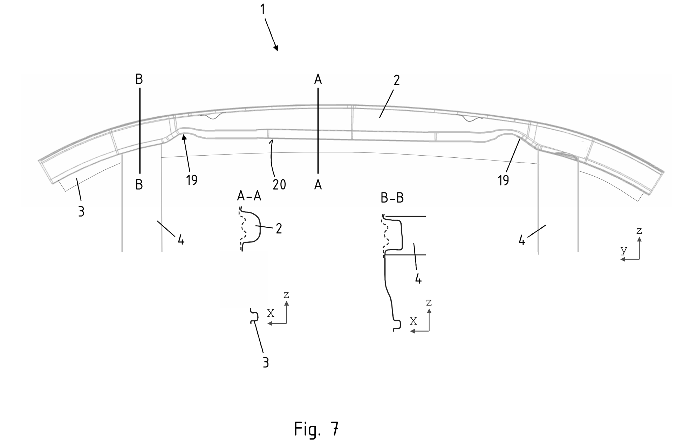

Figur 7 zeigt eine alternative Ausgestaltungsvariante der Stoßfängeranordnung 1 gemäß Figur 6. Hier ist im Bereich des Hauptquerträgers 2 zwischen einer Mitte sowie den Crashboxanbindungen eine jeweilige Triggergeometrie insbesondere in Form einer Sicke 15 im Flansch des Hutprofils ausgebildet. Die Sicke 15 kann sich in beiden Flanschen, in Kraftfahrzeugvertikalrichtung Z direkt übereinander befinden oder auch nur im oberen (oder unteren) Flansch vorgesehen sein. Die Sicke 15 selbst ist dann bevorzugt von dem Schließblech 12 überdeckt ausgebildet. Mithin ist die Sicke 15 hergestellt beim Pressumformen des Hauptquerträgers 2. Anschließend wird diese vom Schließblech 12 überdeckt. Das Schließblech 12 selbst weist keine Sicke 15 auf. Alternativ ist es möglich, dass auch das Schließblech 12 eine Sicke 15 aufweist.

Die Sicken 15 dienen ebenso wie die Rückwand-Konkavität 19 der gezielten Einstellung des Deformationsverhaltens bei bestimmten Crashszenarien, insbesondere einem Zentralpfahltext und einem RCAR-Bumper-Test. Insbesondere im Fall einer nur auf einer Flanschseite vorgesehenen Sicke 15 kann diese mit der Rückwand-Konkavität 19 synergetisch zusammenwirken.

Alternativ kann die Rückwand-Konkavität 19 aus Figur 7 vollständig entfallen oder weniger stark ausgeprägt sein, insbesondere dann, wenn die Sicken 15 in beiden Flanschen des Hauptquerträgers 2 an der Vorderseite angeordnet sind.

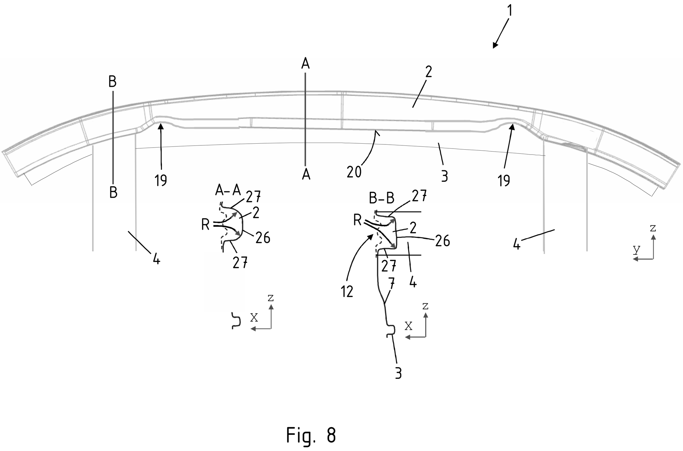

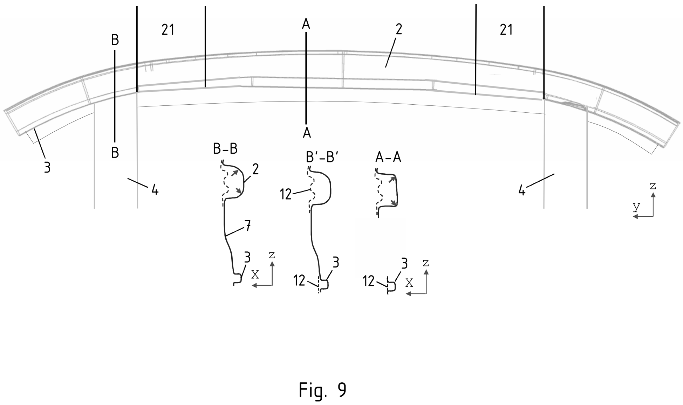

Figur 8 zeigt eine Draufsicht auf eine erfindungsgemäße Stoßfängeranordnung 1. Hierbei weist die Stoßfängeranordnung 1 einen Hauptquerträger 2 sowie einen in Kraftfahrzeugvertikalrichtung Z darunterliegenden Hilfsquerträger 3 auf. Hauptquerträger 2 und Hilfsquerträger 3 sind einstückig und werkstoffeinheitlich aus einer Tailor Welded Blank Platine 8 hergestellt. An der Vorderseite 22ist der Hauptquerträger 2 mit einem Schließblech 12 geschlossen. Das Schließblech 12 kann sich über die gesamte Breite bzw. Länge in Kraftfahrzeugquerrichtung Y erstrecken. Das Schließblech 12 selbst weist zwei Verstärkungssicken auf, ist also in seinem Querschnitt W-förmig ausgebildet. Dies ist erkennbar anhand der Schnittansicht A-A. An der Rückseite 20 des Hauptquerträgers 2 sind gemäß der Draufsicht Konkavitäten 19 ausgebildet. Diese Konkavitäten 19 sind auf den Querschnitt des Hauptquerträgers 2 nach innen gerichtete Eindrückungen bezogen. Diese Eindrückungen befinden sich in einem Abstand zwischen den Crashboxen 4. Die Eindrückungen befinden sich jedoch in einem jeweils äußeren Bereich des Hauptquerträgers 2 und sind somit entfernt von einer nicht näher eingezeichneten Mittenquerschnittsebene bezogen auf die Kraftfahrzeugquerrichtung Y. Hauptquerträger 2 und Hilfsquerträger 3 sind im Wesentlichen als offenes Hutprofil ausgebildet. Das Schließblech kann anstelle der zwei Sicken auch nur eine Sicke aufweisen oder plan ausgeführt sein. Auch eine Softzone wie in Figur 9 angeordnet kann vorhanden sein.

Figur 9 zeigt eine Draufsicht analog zu Figur 8. Hier sind jedoch nicht an der Rückwand 20 Konkavitäten 19 ausgebildet, vielmehr ist ein Längenabschnittsbereich 21 bezogen auf die Kraftfahrzeugquerrichtung Y als sogenanntes Softzone ausgebildet. Mithin ist hier eine Zugfestigkeit Rm bevorzugt unter 1.200 MPa, insbesondere unter 1.000 MPa, ganz besonders bevorzugt größer 500 MPa ausgebildet. Der restliche Bereich des Hauptquerträgers 2 weist dann eine Zugfestigkeit Rm von bevorzugt größer 1.350 MPa auf. Der Längenabschnittsbereich 21 erstreckt sich jeweils zwischen den Crashboxen 4. Bevorzugt ist der Längenabschnittsbereich 21 ca. 5 % bis 10 % der Gesamtlänge in Kraftfahrzeugquerrichtung Y des Hauptquerträgers 2 ausgebildet. Der Längenabschnittsbereich 21 mit der jeweiligen Softzone ist insbesondere von einer Innenseite der Crashbox 4 in Kraftfahrzeugquerrichtung Y bezogen zu einer in Querschnittsebene, ausgewählt. Ferner sind drei Schnittlinien eingezeichnet A-A, B-B und B'-B'. Diese Querschnittsansichten sind im Falle von B-B ausgebildet analog zu Figur 8. Im Falle von der Schnittlinie B'-B' ist auch am Hilfsquerträger 3 ein Schließblech 12 angeordnet. Die Querschnittsausstellung von A-A zeigt dann auch das Schließblech 12 im Bereich des Hilfsquerträgers 3. Das Schließblech 12 kann jedoch im Falle des Hilfsquerträgers 3 auch entfallen. Es sind jedoch keine Triggersicken 15 an der Vorderseite 22 bzw. Konkavitäten 19 an der Rückseite 20 des Hauptquerträgers 2 ausgebildet.

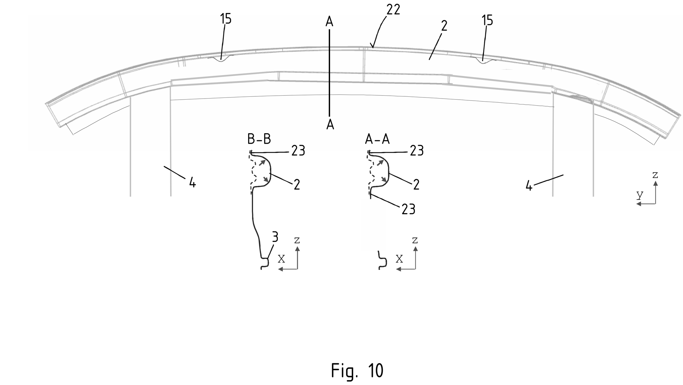

Figur 10 zeigt eine alternative Ausgestaltungsvariante. Hierbei sind an der Vorderseite 22 des Hauptquerträgers 2 zwei Triggersicken 15 ausgebildet. Diese Triggersicken 15 sind jedoch nur in dem Flansch des Hutprofils des Hauptquerträgers 2 ausgebildet. Das Schließblech 12 dazu ist selbst durchgehend ausgebildet. Mithin weist das Schließblech 12 selbst keine Sicken bzw. Triggersicken 15 auf.

Ferner sind in den Figuren 8, 9 und 10, insbesondere in den Querschnittsansichten gemäß der Schnittlinien Radienpfeile im Bereich des Hauptquerträgers 2 eingezeichnet. Ein jeweiliger Radienpfeil gibt den Radius R an, der sich ergibt im Übergang zwischen einem rückseitigen Steg 26 des Hauptquerträgers 2 zu den jeweils daran angrenzenden Schenkeln 27. Gut zu erkennen ist, dass der Radius R im Bereich der Crashboxanbindung 13 gemäß der Schnittlinie B-B kleiner ausgebildet ist, so dass sich ein größerer Steg 26 und damit eine größere Anbindungsfläche 13 für die Crashbox 4 ergibt. Demgegenüber ist der Radius R gemäß der Schnittlinie A-A, also in einem Bereich zwischen den Crashboxen 4 größer. Hierdurch ergibt sich ein kleiner Steg 26. Der Unterschied sollte bei 50 % bis 400 % liegen. Mithin ist der Radius R in dem Anbindungsbereich 13 zwischen den Crashboxen 4 50 % bis 80 % größer als der Radius R im Bereich der Crashboxanbindung 13.

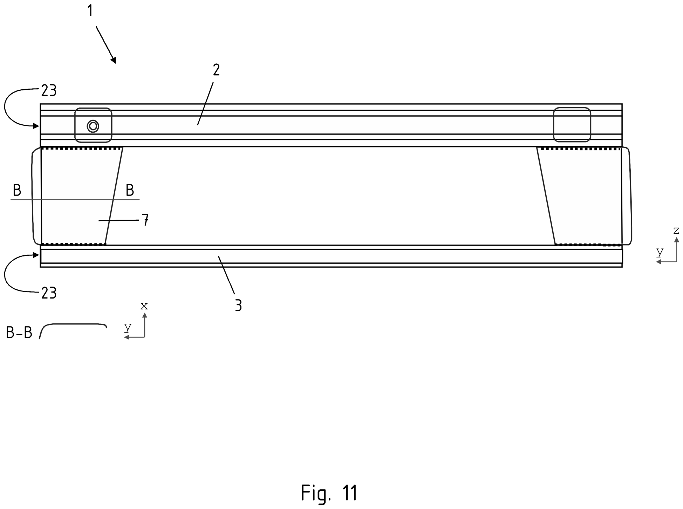

Figur 11 zeigt eine weitere Stirnansicht auf eine Stoßfängeranordnung 1. Hierbei ist der den Hauptquerträger 2 und den Hilfsquerträger 3 verbindende Steg 7 auf die Kraftfahrzeugquerrichtung Y bezogen, an einer Außenseite abgebogen. Dies ist insbesondere in der Querschnittsansicht gemäß der Linie B-B gezeigt. Der abgebogene Abschnitt kann seitlich über ein jeweiliges Ende 23von Hauptquerträger 2 und Hilfsquerträger 3 überstehen.

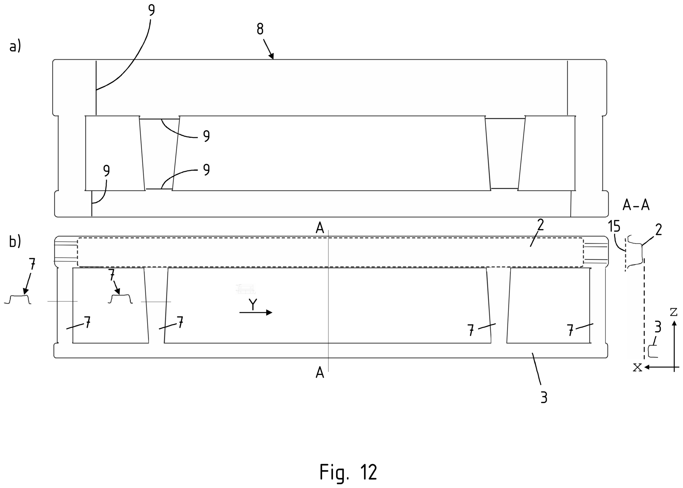

Figur 12a und b zeigen wiederum eine Stirnansicht einer alternativen Ausgestaltungsvariante. In Figur 12a ist die Platine 8 vor der Umformung gezeigt. In Figur 12a sind die einzelnen Verbindungsstellen eingezeichnet, an dem jeweils ein Stumpfstoß ausgebildet ist, um die gemäß Figur 12a dargestellte Tailor Welded Blank Platine 8 herzustellen.

Die Bereiche der späteren Stege 7 sind jeweils in ihrem Querschnitt hutförmig ausgebildet gemäß der Querschnittsansicht direkt nebenliegend in Figur 12b. Der auf die Kraftfahrzeugquerrichtung Y bezogene innere Steg 7 ist konisch auf die Kraftfahrzeugvertikalrichtung Z bezogen nach unten, sich verjüngend ausgebildet. Der Hauptquerträger 2 selbst weist ein Schließblech 12 auf. In der Schnittdarstellung A-A gezeigt, ist ein Offset in Kraftfahrzeuglängsrichtung X dargestellt. Mithin ist der Hilfsquerträger 3 auf die Kraftfahrzeugquerrichtung Y bezogen, vollständig gegenüber dem Hauptquerträger 2 nach hinten versetzt ausgebildet. Eine jeweilige Öffnung von Hauptquerträger 2 und Hilfsquerträger 3 sind gegenläufig zueinander ausgebildet.

An dieser Stelle wird nochmals betont, dass alle zuvor beschriebenen und nachfolgend beschriebenen Ausgestaltungsvarianten für sich alleine jeweils verwendet werden können und beliebig kombiniert werden können mit anderen Ausführungsbeispielen in dieser Erfindung, ohne dabei den Erfindungsgegenstand zu verlassen.

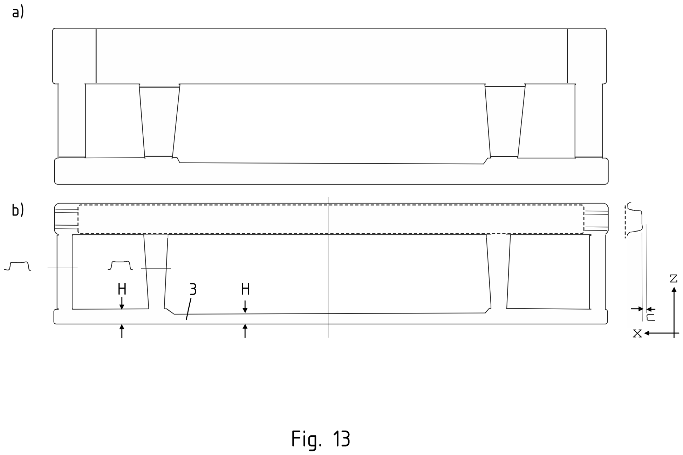

Figur 13a und b zeigt eine analoge Ausgestaltungsvariante zu Figur 12a und b. Hierbei ist der Hilfsquerträger 3 in einem mittleren Abschnitt die Höhe H des Hilfsquerträgers 3 reduziert ausgebildet. Insbesondere ist die Höhe zu einem äußeren Abschnitt des Hilfsquerträgers 3 um mehr als 10 %, insbesondere mehr als 20 %, jedoch nicht mehr als 50 % in Kraftfahrzeugvertikalrichtung Z reduziert.

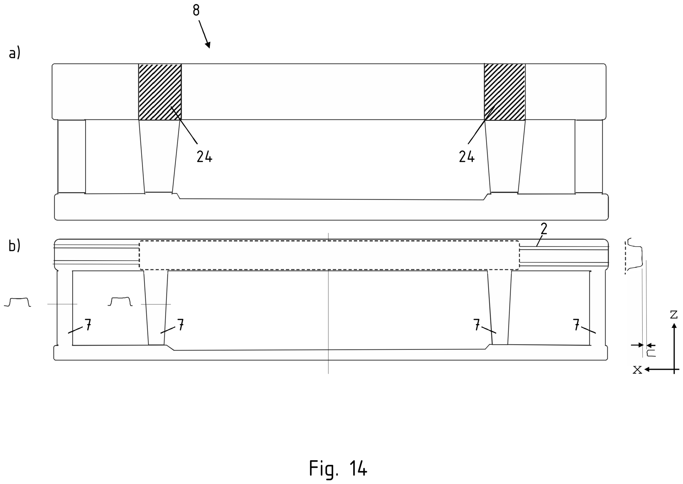

Figur 14a und b zeigt eine analoge Ausgestaltungsvariante zu Figur 12a und b. Hier ist im Bereich der später anzubindenden Crashboxen 5 eine Überlappung 24 ausgebildet. Mithin bildet die Tailor Welded Blank Platine 8 in diesem Bereich eine Doppellage aus. Beispielsweise kann ein durch den Platinenstreifen zur Herstellung des späteren Hauptquerträgers 2 ausgebildet sein. Ein jeweiliger Platinenstreifen, der eingesetzt wird, um ein späteren Steg 7 auszubilden, wird dann überlappend eingesetzt und in dem Bereich der Überlappung 24 ist, wie gesagt, eine Doppellage der Platine 8 ausgebildet. Diese wird zumindest randseitig abschnittsweise umlaufend verschweißt. Im Bereich der Crashboxanbindung ist somit eine Materialverstärkung, insbesondere Materialdopplung, ausgebildet.

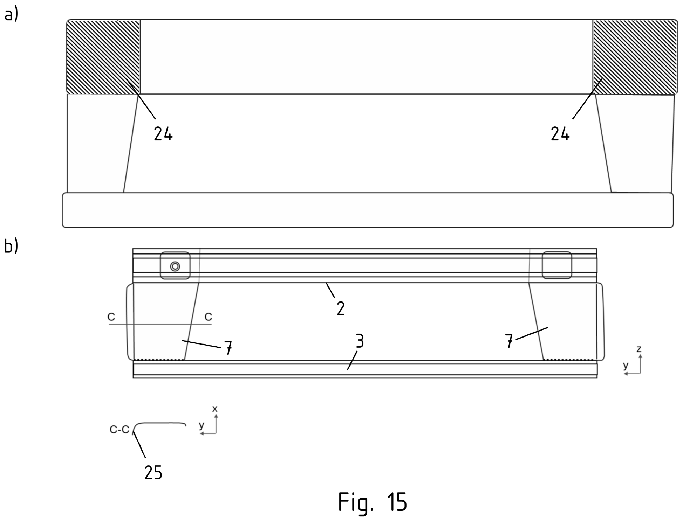

Figur 15a und b zeigt eine alternative Ausgestaltungsvariante. Auch hier ist eine Überlappung 24 in der Herstellung der Tailor Welded Blank Platine 8 ausgebildet. Endbereich und Crashboxanbindungszone sind hier gleichermaßen ineinander folgend ausgebildet. Auch hier ist eine Doppellage ausgebildet, so dass eine Verstärkung vorhanden ist.

Ferner ist gemäß der Darstellung in Figur 15b der Steg 7 auf die Kraftfahrzeugquerrichtung Y bezogen, relativ breit ausgebildet. Eine Abbiegung 25 ist auf die Kraftfahrzeuglängsrichtung X nach hinten gerichtet. Der Hauptquerträger 2 und der Hilfsquerträger sind mit ihrer jeweiligen Öffnung nach vorne zeigend auf die Kraftfahrzeuglängsrichtung X, ausgebildet. In diesem Beispiel wäre kein Schließblech 12 angeordnet.

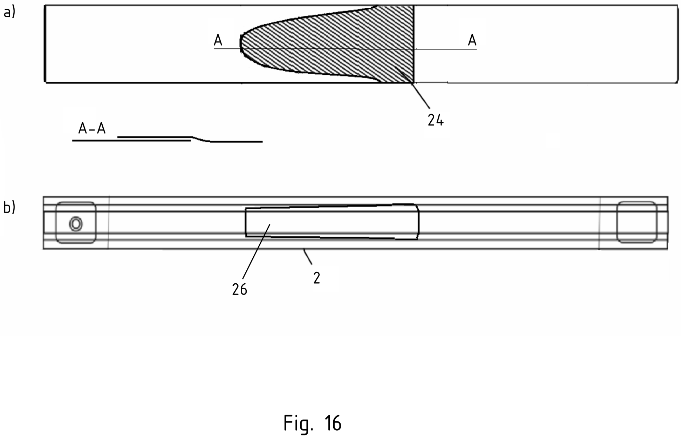

Figur 16 schließlich zeigt einen eigenständigen Erfindungsgedanken, welcher mit denjenigen Merkmalen der zuvor beschriebenen Erfindung und Ausführungsform kombiniert werden kann, sofern es das verwendbare Stahlmaterial, die Gestaltung der Rückseite und Vorderseite mit Triggersicken, die Anordnung einer Softzone oder der unterschiedlichen Radien zwischen Rückseite/Rückwand und Schenkeln betrifft.

Figur 16 zeigt eine am Hauptquerträger 2, welcher über nicht gezeigte Stege mit einem nicht gezeigten Hilfsquerträger verbunden sein kann. Dieser Hauptquerträger ist aus einer Tailor Welded Platine mit zwei Platinen aus einem Stahlwerkstoff durch Warmumformen und Presshärten hergestellt und im Querschnitt als einseitig offenes Hohlprofil ausgebildet und mit dem Kraftfahrzeug gekoppelt, wobei der Hauptquerträger abschnittsweise ein Schließblech aufweist und in seinem mittleren Längenabschnitt eine höhere Wandstärke durch Ausbildung einer Überlappung der zwei Platinen der Tailor Welded Platine aufweist. Durch die Überlappung in der Mitte bildet sich eine Doppelblechlage als Verstärkung und Versteifung, welche zum einen ein vergrößertes Energieaufnahmevermögen und zum anderen eine verringerte Rissgefahr bei einem zentralen Pfahlaufprall bewirkt. Die Überlappung 24 weist eine Vielzahl Schweißpunkte durch Widerstandspunktschweißen oder punktuelles oder gestepptes Laserschweißen auf, welche aber durch das gemeinsame Warmumformen und Presshärten der Tailored Welded Platine frei von Wärmeeinflusszonen sind wie sie bei einem nachträglichen Schweißen zweier separat hergestellter Querträgerhälften (links, rechts) vorhanden wären. Die Überlappung ist hier überwiegend nur im U-förmigen Abschnitt des Querträgers, mithin an der Rückseite und davon abstehenden Schenkeln ausgebildet und nur über ein geringes Maß vollständig bis in die Flansche. Die Überlappung hat eine Länge von 200 mm bis 500 mm, gemessen entlang der Längserstreckung des Querträgers.

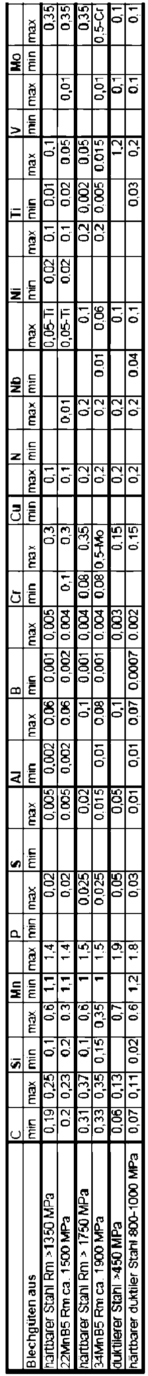

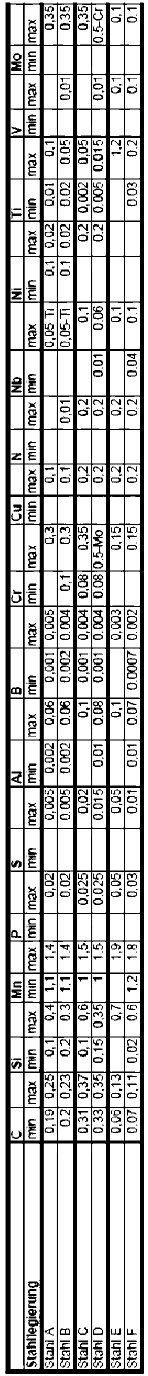

### Bezugszeichen:

- 1 -: Stoßfängeranordnung
- 2 -: Hauptquerträger
- 3 -: Hilfsquerträger
- 4 -: Crashbox
- 5 -: Endbereich zu 2
- 6 -: Länge zu 2
- 7 -: Steg
- 8 -: Platine
- 9 -: Verbindungsstelle
- 10 -: Stegblech
- 11-: Überstand
- 12 -: Schließblech
- 13 -: Crashboxanbindung
- 14 -: Mitte zu 2
- 15 -: Sicke / Einmuldung
- 16 -: vordere Schale
- 17 -: hinterer Teil zu 2
- 18 -: hinterer Teil zu 3
- 19 -: Konkavität
- 20 -: Rückseite
- 21-: Längenabschnittsbereich
- 22 -: Vorderseite
- 23 -: Ende
- 24 -: Überlappung
- 25 -: Abbiegung
- 26 -: rückseitiger Steg
- 27 -: Schenkel

- H -: Höhe zu 3
- R -: Radius
- X -: Kraftfahrzeuglängsrichtung
- Y -: Kraftfahrzeugquerrichtung
- Z -: Kraftfahrzeugvertikalrichtung

## Patentansprüche

1. Stoßfängeranordnung (1) für ein Kraftfahrzeug, aufweisend einen Hauptquerträger (2) und einen auf die Kraftfahrzeugvertikalrichtung Z bezogen darunter angeordneten Hilfsquerträger (3), wobei der Hauptquerträger (2) und der Hilfsquerträger (3) jeweils einen um die Kraftfahrzeugvertikalrichtung Z gekrümmten Verlauf aufweisen und der Hauptquerträger (2) und der Hilfsquerträger (3) über vertikale Stege (7) miteinander verbunden sind, wobei der Hauptquerträger (2), Hilfsquerträger (3) und Stege (7) aus einer Tailor Welded Platine aus mindestens einem Stahlwerkstoff durch Pressumformen hergestellt sind, wobei der Hauptquerträger (2) und der Hilfsquerträger (3) im Querschnitt als einseitig offenes Hohlprofil ausgebildet sind und die Stoßfängeranordnung (1) über Crashboxen (4) mit dem Kraftfahrzeug gekoppelt ist, **dadurch gekennzeichnet, dass** der Hauptquerträger (2) abschnittsweise ein Schließblech (12) aufweist und dass die Stoßfängeranordnung (1) abschnittsweise unterschiedliche Festigkeiten und/oder Wandstärken aufweist.

2. Stoßfängeranordnung (1) nach Anspruch 1, **dadurch gekennzeichnet, dass** die Tailor Welded Platine an ihren Verbindungsstellen mittels Stumpfstoß verschweißt ist, insbesondere mittels Laserschweißen.

3. Stoßfängeranordnung (1) nach Anspruch 1 oder 2, **dadurch gekennzeichnet, dass** die Zugfestigkeit Rm bereichsweise größer als 1.350 MPa ist, insbesondere größer 1.500 MPa und dass in den übrigen Bereichen die Zugfestigkeit kleiner 1.000 MPa ist.

4. Stoßfängeranordnung (1) nach einem der Ansprüche 1 bis 3, **dadurch gekennzeichnet, dass** insgesamt vier Stege (7) vorhanden sind, wobei zwei Stege (7) im Bereich der Crashboxen (4) angeordnet sind und zwei Stege (7) in einem äußeren Endbereich (5), bezogen auf die Kraftfahrzeugquerrichtung Y.

5. Stoßfängeranordnung (1) nach einem der Ansprüche 1 bis 4, **dadurch gekennzeichnet, dass** bezogen auf die Kraftfahrzeugquerrichtung Y zwischen den Crashboxen (4) im Hauptquerträger (2) mindestens zwei Schwächungen, insbesondere Triggersicken ausgebildet sind, bevorzugt sind die Triggersicken an einer Vorderseite des Hauptquerträgers (2) ausgebildet und/oder die Triggersicken sind an einer Rückseite des Hauptquerträgers (2) ausgebildet.

6. Stoßfängeranordnung (1) nach dem vorhergehenden Anspruch, **dadurch gekennzeichnet, dass** die Triggersicken an der Rückseite des Hauptquerträgers (2) von dem Schließblech (12) überdeckt sind.

7. Stoßfängeranordnung (1) nach einem der vorhergehenden Ansprüche, **dadurch gekennzeichnet, dass** das Schließblech (12) bezogen auf die Kraftfahrzeuglängsrichtung X an einer Vorderseite des Hauptquerträgers (2) angeordnet ist.

8. Stoßfängeranordnung (1) nach einem der vorhergehenden Ansprüche, **dadurch gekennzeichnet, dass** der Hilfsquerträger (3) zumindest abschnittsweise von einem Schließblech (12) geschlossen ist.

9. Stoßfängeranordnung (1) nach einem der vorhergehenden Ansprüche, **dadurch gekennzeichnet, dass** die Stege (7) von einem Schließblech (12) verschlossen sind.

10. Stoßfängeranordnung (1) nach einem der vorhergehenden Ansprüche, **dadurch gekennzeichnet, dass** das Schließblech (12) sich über die gesamte Länge des Hauptquerträgers (3) erstreckt.

11. Stoßfängeranordnung (1) nach einem der vorhergehenden Ansprüche, **dadurch gekennzeichnet, dass** die Tailor Welded Platine (8) an mindestens einer Verbindungsstelle (9) durch ein Überlappstoß miteinander verschweißt ist, insbesondere ist der Überlappstoß im Bereich einer Crashboxanbindung (13) ausgebildet, ganz besonders bevorzugt beträgt die Fläche der Überlappung (24) mehr als 10 cm².

12. Stoßfängeranordnung (1) nach einem der vorhergehenden Ansprüche, **dadurch gekennzeichnet, dass** der Hauptquerträger (2) im Querschnitt des Hutprofils in einem Anbindungsbereich der Crashboxen (4) einen kleineren Radius (R) zwischen Übergang vom Steg (26) zum Schenkel (27) des Hutprofils aufweist, wobei der Hauptquerträger (2) im Querschnitt im Bereich zwischen den Crashboxanbindungen (13) einen in Relation dazu größeren Radius (R) als Übergang von Steg (26) zu Schenkel (27) des Hutprofils ausgebildet aufweist.
